# EUROPEAN PATENT APPLICATION

(11) **EP 1 557 794 A1**
(43) Date of publication of application: **27.07.2005**
(21) Application number: 03769925.3
(22) Date of filing: 29.10.2003
(51) Int. Cl.: G06T 15/50, G06T 15/00, G06T 17/40

(54) **IMAGE PROCESSING DEVICE, IMAGE PROCESSING PROGRAM, RECORDING MEDIUM RECORDING THE PROGRAM, IMAGE PROCESSING METHOD, AND SHADING INFORMATION ACQUISITION DEVICE**

(30) Priority: 30.10.2002 JP 2002316531
(71) Applicant: Digital Fashion Ltd., Osaka-shi, Osaka 530-0004 (JP); Kabushiki Kaisha Toshiba, Tokyo 105-8001 (JP)
(72) Inventor: SAKAGUCHI, Yoshiyuki, Digital Fashion Ltd., Kita-ku, Osaka-shi, Osaka 530-0004 (JP); TAKEMURA, Shintaro, Digital Fashion Ltd., Kita-ku, Osaka-shi, Osaka 530-0004 (JP); MITSUI, Shigeru, Digital Fashion Ltd., Kita-ku, Osaka-shi, Osaka 530-0004 (JP); YAMAUCHI, Yasunobu, Toshiba Corporation, Minato-ku, Tokyo 105-8001 (JP); KUNIMATSU, Atsushi, Toshiba Corporation, Minato-ku, Tokyo 105-8001 (JP)
(74) Representative: Müller-Boré & Partner Patentanwälte
(86) International application number: PCT/JP2003/013809
(87) International publication number: WO 2004/040521

(57) **Abstract**

Disclosed is an image processing apparatus, comprising a shading-information acquisition device 1 for picking up an image of an actual sample, a shading-information calculation section 201 for calculating shading information using the image acquired by the shading-information acquisition device 1, and storing the calculated shading information in a shading-information storage section 101, in association with the value of a parameter including an image pickup condition during the pickup of the image, a parameter calculation section 203 for calculating a specific value of the parameter at given position of a virtual 3-dimensional model, a shading-information read section 204 for allowing the shading-information storage section 101 to read the shading information corresponding to the calculated parameter value therethrough, and a shading processing section 206 for calculating a brightness value at a target position HP of the virtual 3-dimensional model, using the read shading information and a texture stored in a texture storage section 103.

## Description

### TECHNICAL FIELD

The present invention relates to a rendering technology for a virtual 3-dimensional model virtually created on a computer.

### BACKGROUND ART

A virtual 3-dimensional model created in a virtual 3-dimensional space on a computer is drawn (or rendered) on a virtual screen located at a given position in the virtual 3-dimensional space, while taking account of the respective positions of a virtual camera and a light source which are arranged in the virtual 3-dimensional space, and the influences, such as reflection and refraction in the virtual 3-dimensional space, of a light virtually emitted from the light source, and then an image drawn on the virtual screen is displayed on a display. During the rendering process, the virtual 3-dimensional model is subjected to a shading processing in consideration of the influences of the light emitted from the virtual light source, the material of the virtual 3-dimensional model, and other factors. In a conventional image processing apparatus, the shading processing has been performed based on parameters set by an operator.

However, a realistic shading processing can be achieved only if the parameters are accurately set up. Thus, it has been difficult for beginners to perform the shading processing requiring a lot of skill. In addition, even a skilled person has been required to spend an enormous amount of time and effort in the shading processing.

In particular, a fibrous structure, such as cloth or fabric, has optical anisotropy in which the reflectance and diffusion of light are varied depending on the incident angle of the light thereon. Thus, in order to perform a realistic shading processing for a virtual 3-dimensional model consisting of such a fibrous structure, it is required to further accurately set up various parameters, such as ambient light (ambient), diffused light (diffuse) and reflected light (specular) in the virtual 3-dimensional space. That is, not only beginners but also skilled persons have not been able to achieve the realistic shading processing without spending an enormous amount of time and effort.

In view of the above problems, it is therefore an object of the present invention to provide an image processing apparatus, a data structure, a shading-information acquisition device, an image processing program, a recording medium recording the program thereon and an image processing method, capable of performing a realistic shading processing for a virtual 3-dimensional model even by a simple operation without complicated jobs for setting up the various parameters.

### DISCLOSURE OF THE INVENTION

The present invention provides an image processing apparatus for rendering a virtual 3-dimensional model created in a virtual 3-dimensional space. The image processing apparatus comprises shading-information acquisition means for acquiring shading information calculated with respect to each of the values of parameters in accordance with images of an actual sample picked up while changing the value of said parameter. The parameters includes an image pickup condition at least comprised of an image pickup direction and a light emission direction relative to the actual sample. The image processing apparatus also includes shading-information storage means for storing the acquired shading information in association with the corresponding parameters values, parameters calculation means for calculating a specific value of the parameters corresponding to a given region of the virtual 3-dimensional model, in accordance with the respective positions of a virtual camera and a virtual light source which are arranged in the virtual 3-dimensional space and the shape of the region of the virtual 3-dimensional model, and shading processing means for reading the shading information corresponding to the calculated parameters value from the shading-information storage means and calculating a brightness value of the given region of the virtual 3-dimensional model in accordance with the read shading information.

According to the image processing apparatus, shading information are acquired in accordance with images picked up from an actual sample while changing the value of parameters including an image pickup condition, and the acquired shading information are stored in the shading-information storage means in association with the value of the parameters at least including the image pickup condition. A specific value of the parameter corresponding to a given region of a virtual 3-dimensional model is then calculated, and the shading information corresponding to the calculated parameter value is read from the shading-information storage means. Subsequently, a brightness value in the given region is calculated in accordance with the read shading information to perform a shading processing.

Thus, the shading processing can be performed in a simple operation without any operation for setting up complicated parameters. In addition, the shading processing is performed using the shading information acquired in accordance with the images of the actual sample picked up under the different image pickup conditions. This makes it possible to express the texture of the material of the actual sample arising from coherent light or the like and the optical anisotropy of fabrics.

### BRIEF DESCRIPTION OF THE DRAWINGS

FIG. 1 is a block diagram showing the entire structure of an image processing apparatus according to one embodiment of the present invention.
FIG. 2 is a side view of an image acquisition mechanism.
FIG. 3 is an enlarged view of a light source arm, seeing from a direction of the arrow K1 in FIG. 2.
FIG 4 is a top view of the image acquisition mechanism.
FIG. 5 is a perspective view of the image acquisition mechanism which is schematically represented.
FIG. 6 is a functional block diagram of the image processing device according to the embodiment of the present invention.
FIG. 7 is a diagram conceptually showing a data structure in a shading-information storage section.
FIG 8 is a diagram conceptually showing a data structure in a shading-information storage section.
FIG. 9 is an explanatory schematic diagram of processing to be performed by a geometrical information acquisition section and parameters calculation section.
FIG 10 is an explanatory schematic diagram of processing to be performed by a geometrical information acquisition section and parameters calculation section.

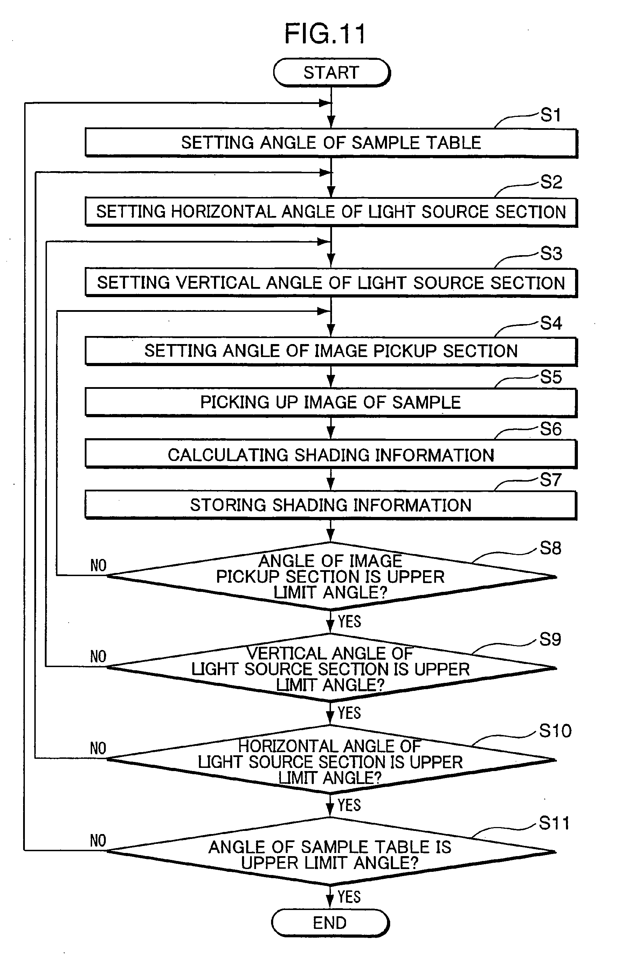

FIG 11 is a flowchart showing a processing for calculating shading information using images of an actual sample placed on a sample table, in the image processing apparatus according to the embodiment of the present invention.
FIG 12 is a flowchart showing a shading processing to be performed by the image processing apparatus according to the embodiment of the present invention.
FIG 13 is an explanatory diagram of a processing to be performed by a shading processing section, wherein A is a graph showing the relationship between a brightness value C and the brightness value T of a texture, and B conceptually shows a texture to be stored in a texture storage section.
FIG 14 is an explanatory diagram of the effect of an image processing in the image processing apparatus according to the embodiment of the present invention, wherein A shows an image rendered by a conventional image processing apparatus, and B shows an image rendered by the image processing apparatus according to the embodiment of the present invention.

### BEST MODE FOR CARRYING OUT THE INVENTION

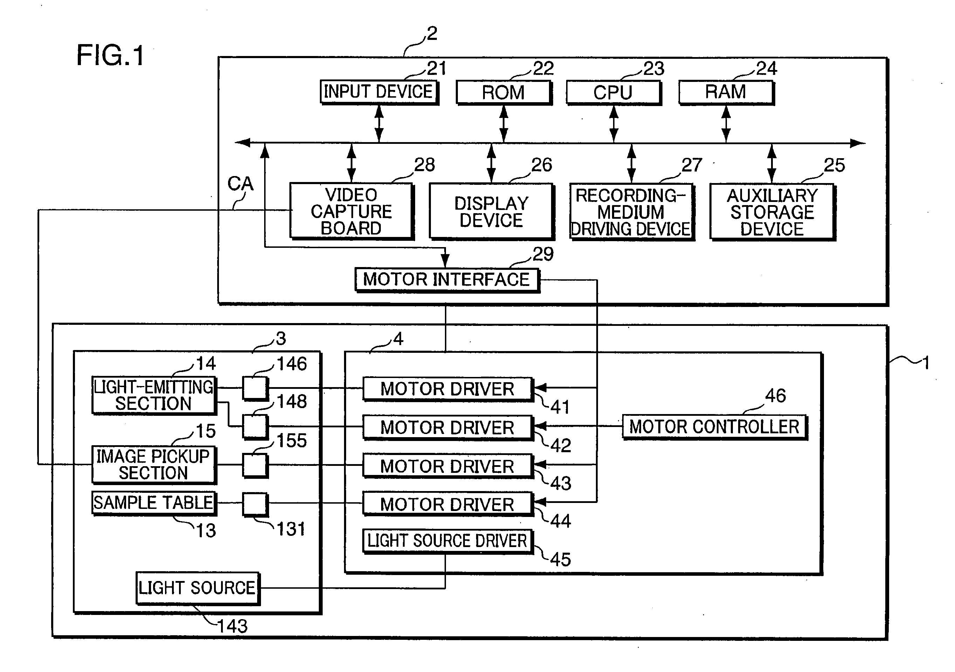

An image processing apparatus according a preferred embodiment of the present invention will now be described, by way of illustration of the best mode contemplated of carrying out the invention. FIG 1 is a block diagram showing the entire structure of the image processing apparatus according to the embodiment. The image processing apparatus comprises a shading-information acquisition device 1 for acquiring shading information to be used in rendering a virtual 3-dimensional model, and a personal computer 2 for performing an image processing, such as rendering, using the shading information acquired by the shading-information acquisition device 1.

The shading-information acquisition device 1 includes an image acquisition mechanism 3 for emitting light onto an actual sample and picking up an image of the actual sample, and a control section 4 for controlling the operation of the image acquisition mechanism 3.

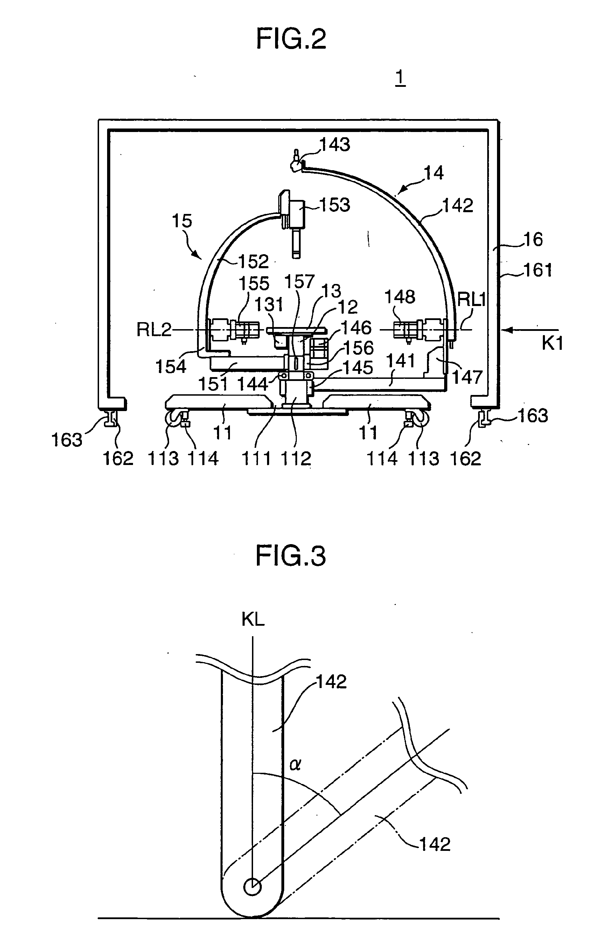

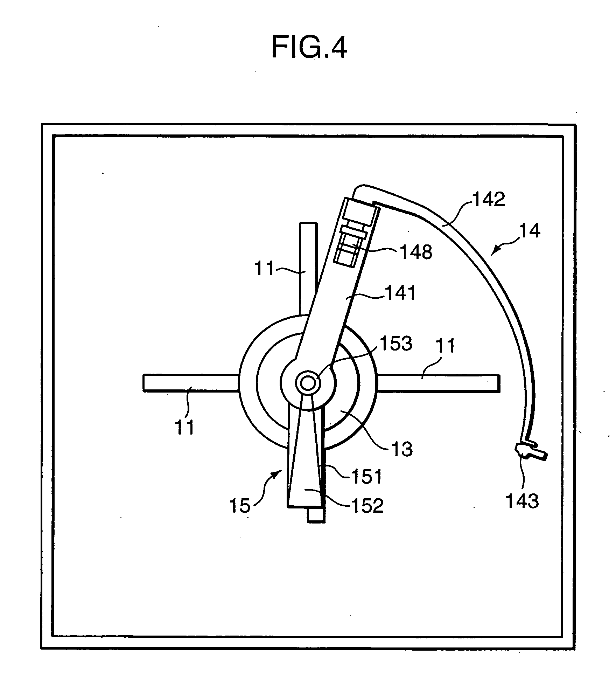

FIG. 2 is a side view of the image acquisition mechanism 3. FIG 3 is an enlarged view of a light source arm 142, seeing from a direction of the arrow K1 in FIG. 2. FIG. 4 is a top view of the image acquisition mechanism 3. The image acquisition mechanism 3 includes a pedestal 11, a shaft 12 upstandingly mounted on the pedestal 11, a sample table 13 rotatably supported by the top end of the shaft 12, a light-emitting section 14 for emitting light onto an actual sample placed on the sample table 13, an image pickup section 15 for picking up an image of the sample on the sample table 13, and a cover 16 for covering the entire mechanism.

The pedestal 11 has a disk-shaped concave portion 111, and four legs each extending radially outward from the outer periphery of the concave portion 111. The concave portion 111 is formed with a bracket 112 in which the shaft 12 is fixedly interfitted. The pedestal 11 is also provided with one or more pairs of a wheel 113 for moving the pedestal 11 and a stopper 114 for fixing the pedestal 11 to the ground, at appropriate positions adjacent to the outer edge thereof.

The sample table 13 is a disk-shaped member which has a diameter less than that of the pedestal 11, and a central region formed as a cylindrical convex portion (not shown) extending toward the pedestal 11 in a manner so as to be rotatably interfitted in the shaft 12. A motor 131 is attached to the convex portion of the sample table 13 so as to rotate the sample table 13 in a horizontal plane. More specifically, the motor 131 is attached to the convex portion in such a manner that a gear fixed to a motor shaft thereof engages with a gear mounted around the outer periphery of the convex portion. Thus, in response to a driving force received from the motor, the sample table 13 is rotated at a given angle and positioned in place.

The light-emitting section 14 includes an arm-shaped connecting arm 141 which has one end attached to the shaft 12 and extends outward in a direction orthogonal to the axial direction of the shaft 12, a light source arm 142 rotatably attached to the other end or outward end of the connecting arm 141, and a light source 143 connected to one of the ends of the light source arm 142.

A tubular bearing holder 145 having a bearing 144 on the inner peripheral surface thereof is attached to the end of the connecting arm 141 on the side of the shaft 12, so as to allow the shaft 12 to be inserted into the bearing holder 145 through the bearing 144. A motor 146 is attached to the bearing holder 145 through a gear fixed to a motor shaft thereof and a gear mounted on the bearing holder 145, so as to rotate the connecting arm 141 in a horizontal plane.

The light source arm 142 is attached to the connecting arm 141 through a connecting member 147 upstandingly mounted on the outward end of the connecting arm 141 in parallel with the axial direction of the shaft 12, in a rotatable manner about a rotational axis RL1 parallel to the longitudinal direction of the connecting arm 141. More specifically, given that the angle between a reference line KL vertically extending in a direction orthogonal to the rotational axis RL1 and the light source arm 142 is a as shown in FIG 3, and a counterclockwise direction is positive, the light source arm 142 can be rotated within an angle a ranging from - 90° to + 90°. A motor 148 is attached to the light source arm 142 so as to rotate the light source arm 142 relative to the connecting arm 141. Thus, in response to a driving force from the motor 148, the light source arm 142 is rotated at a given angle and positioned in place.

The light source arm 142 has an arc shape such that when it is positioned at an angle a of 0 (zero) degree, an image pickup unit 153 has an image pickup direction oriented toward the center O of the sample table 13.

The light source 143 comprises a metal halide light generator (not shown) serving as a light-emitting source, and a means for converting an emitted light into a parallel light (not shown), such as a cylindrical lens, which is attached to the light-emission side of the metal halide light generator. The light source 143 is connected to the end of the light source arm 142 in such a manner that the light emission direction can be oriented toward the center O of the sample table.

The image pickup section 15 has approximately the same structure as that of the light-emitting section 14. Specifically, the image pickup section 15 includes major components consisting of a connecting arm 151, an image pickup arm 152 attached to the connecting arm 151 in a rotatable manner about a rotational axis RL2 parallel to the longitudinal direction of the connecting arm 151, and an image pickup unit 153 connected to one of the ends of the image pickup arm.

The connecting arm 151 has a longitudinal length less than that of the connecting arm 141. In the same manner as in the light-emitting section 14, given that the angle between a reference line KL and the image pickup arm 152 is B, and a counterclockwise direction is positive, the image pickup arm 152 connected to the outward end of the connecting arm 151 can be rotated within an angle β ranging from - 90° to + 90°. The image pickup arm 152 has an arc shape such that when it is positioned at an angle β of 0 (zero) degree, the image pickup unit 153 has an image pickup direction oriented toward the center O of the sample table 13.

A motor 155 is attached to the image pickup arm 152 through a connecting member 152 upstandingly mounted on the outward end of the connecting arm 151. Thus, in response to a driving force received from the motor 155, the image pickup arm 152 is rotated at a given angle and positioned in place.

A tubular holder 156 is attached to the end of the connecting arm 141 on the side of the shaft 12, so as to allow the shaft 12 to be inserted into the holder 156. The holder 156 is fixed to the shaft 12 with a key or cotter pin 157.

The image pickup unit 153 comprises a CCD camera, a zoom lens and a close-up lens (all of which are not shown). The image pickup unit 153 is connected to the end of the image pickup arm 152 in such a manner that the image pickup direction can be oriented toward the center O of the sample table.

The cover 16 has a rectangular parallelepiped shape with no bottom wall. One or more wheels 162 for carrying the cover 16 are attached at appropriate positions of the bottom surface of the sidewall 161 of the cover 16, and one or more stoppers 163 for fixing the cover 16 to the ground are attached at positions adjacent to the wheels 162. The cover 16 is not limited to the rectangular parallelepiped shape, but may be formed in any other suitable shape, such as a dome shape, capable of covering the entire image acquisition mechanism 3.

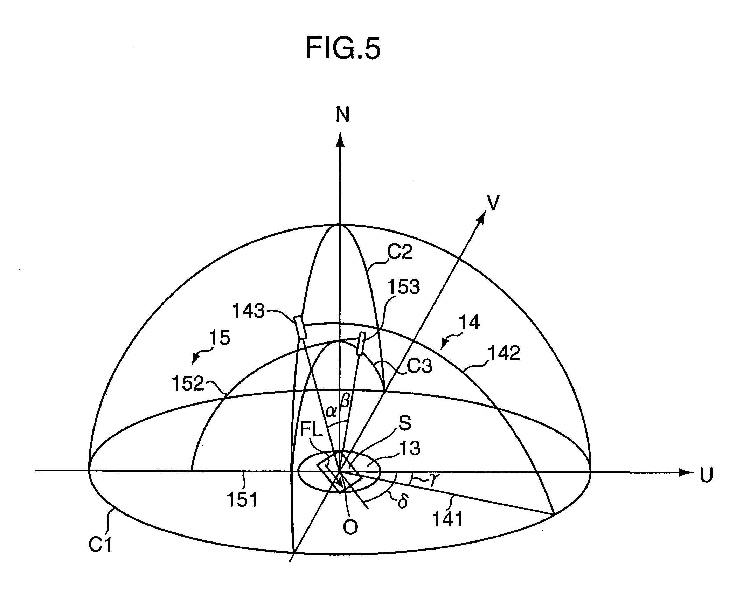

FIG 5 is an explanatory perspective view of the structure of the image acquisition mechanism 3. In FIG 5, a rectangular coordinate system is virtually illustrated based on axes N, U and V with the origin at the center O of the sample table 13, for the sake of simplicity. The axis U is aligned with the longitudinal direction of the connecting arm 151. The rotation angle of the sample table 13 or an angle d is determined on the basis of the axis U. The angle γ between the axis U and the connecting arm 141 is the horizontal rotation angle of the light-emitting section 14. Further, in this embodiment, a fabric S as an actual sample is placed on the sample table 13 in such a manner that when d = zero degree, the fibrous direction FL of the fabric S is parallel to the axis U. Thus, the angle d of the sample table 13 relative to the axis U is equal to the angle of the fibrous direction FL of the fabric S relative to the axis U.

The connecting arm 141 is rotated by the motor 146 in such a manner that the outward end 141a is moved along the circumference C1 on the plane U-V, and positioned at a certain angle d in the range of zero to 360-degree. The light source arm 142 is rotated by the motor 148 in such a manner that the light source 143 is moved along the circular arc C2 on the plane N-V, and positioned at a certain angle a in the range of - 90-degree to + 90-degree on the basis of the axis N. The image pickup arm 152 is rotated by the motor 155 in such a manner that the image pickup unit 153 is moved along the circular arc C3 on the plane N-V, and positioned at a certain angle β in the range of - 90-degree to + 90-degree on the basis of the axis N. These four angles a, β, γ and d are used as parameters a, β, γ and d.

As shown in FIG 1, the personal computer 2 comprises an input unit 21 for receiving an operation command of an operator, a ROM (read-only memory) 22 recording thereon a basic program, such as BIOS, for operating the personal computer 2, a CPU (central processing unit) 23 for executing an image processing program, a RAM (random access memory) 24 for use as a working space of the CPU 23, an auxiliary storage unit 25 for storing an image processing program, an operating system and others, a display unit 26 for displaying an image processed by the CPU 23, and a recording-medium driving unit 27 for reading data recorded on a recording medium, such as a flexible disk, CD-ROM or DVD-ROM.

The personal computer 2 further includes a video capture board 28 for acquiring an image of an actual sample picked up by the image pickup unit 153, through a cable CA connected to a DV terminal compliant with the IEEE 1394 standard, and a motor interface 29 for interfacing between the CPU 23 and an after-mentioned motor controller 46.

The ROM 22, CPU 23, RAM 24, auxiliary storage unit 25, display unit 26 and recording-medium driving unit 27 are connected with each other through bus lines. The input unit 21 including a keyboard and mouse is connected, for example, to a USB port provided at the back of the body of the personal computer 2.

In the image processing apparatus according to this embodiment, a recording medium, such as a CD-ROM, recording thereon an image processing program configured to allow the personal computer 2 to serve as an image processing device is loaded into the recording-medium driving unit 27 to install the image processing program in the auxiliary storage unit 25, so that the personal computer 2 can be used as an image processing device. Alternatively, the image processing program may be installed by means of download from a WEB server storing it via the Internet.

Further, the image processing program may be executed between a WEB server and the personal computer 2 in a decentralized manner, for example, in such a manner that the personal computer 2 enters various data into a WEB server provided on the Internet, and the WEB server processes the data and transmits the processes result to the personal computer 2.

The control section 4 includes four motor drivers 41 to 44 operable to control the motor 146 for rotating the connection arm 141, the motor 148 for rotating the light source arm 142, the motor 155 for rotating the image pickup arm 152, and the motor 131 for rotating the sample table 13 in response to an instruction received from the personal computer 2, respectively. The control section 4 also includes a light source driver 45 for turning on/off the light source 143 and controlling the intensity of light emitted from the light source 143, and a motor controller 46 for outputting various signals, such as a pulsed signal or control signal, to the motor drivers 41 to 44.

In response to a control signal for designating the normal or reverse rotation of each of the motor or a pulsed signal received from the motor controller 46, each of the motor drivers 41 to 44 is operable to convert the received pulsed signal into a pulsed power signal and excite the coil of the corresponding motor so as to drive the motor. The light source driver 45 is operable, in response to a control signal received from the personal computer 2, to generate a driving current, for example, having a level proportional to the intensity of the control signal, so as to turn on the light source 143.

The motor controller 46 is operable, in response to various signals received from an after-mentioned image-pickup-mechanism control section 208 through the motor interface 29, to generate various output signals for driving the motor drivers 41-44 according to the received signals.

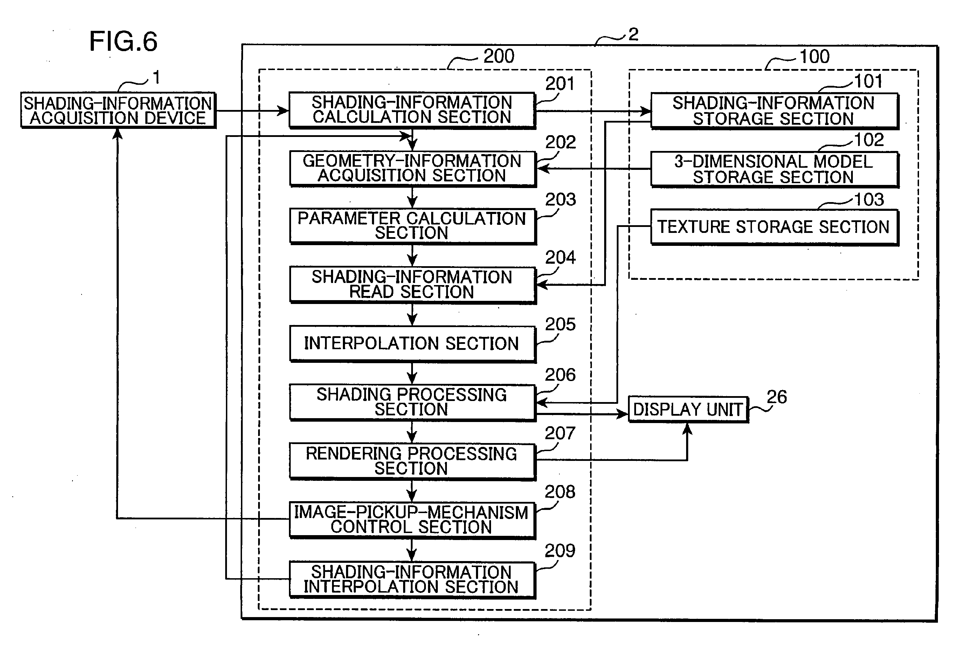

FIG. 6 is a functional block diagram showing the image processing device. The image processing apparatus comprises a storage unit 100 primarily composed of the RAM 24, and a program execution unit 200. The storage unit 100 includes a shading-information storage section 101, a 3-dimensional model storage section 102, a texture storage section 103. The program execution section 200 includes a shading-information calculation section 201, a geometry-information acquisition section 202, a parameter calculation section 203, a shading-information read section 204, an interpolation section 205, a shading processing section 206, rendering processing section 207, an image-pickup-mechanism control section 208, and a shading-information interpolation section 209.

In response to an image of an actual sample picked up by the image acquisition mechanism 3, the shading-information calculation section 201 is operable to set up a quadrangular shaped region of n pixels x m pixel having a gravity center at a certain position (e.g. center position) on the received image, and calculate each of average, maximum and minimum brightness values of the set-up region. The shading-information calculation section 201 is then operable to store the calculated average, maximum and minimum brightness values serving as shading information in the shading-information storage section 101, in association with the values of the parameters a, B, . γ and d in the pickup operation of the received image.

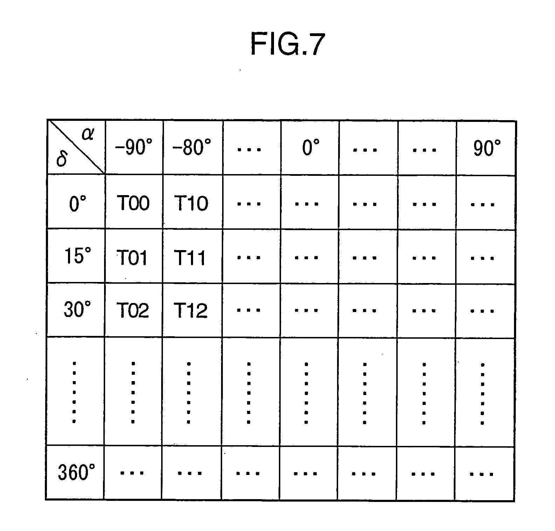

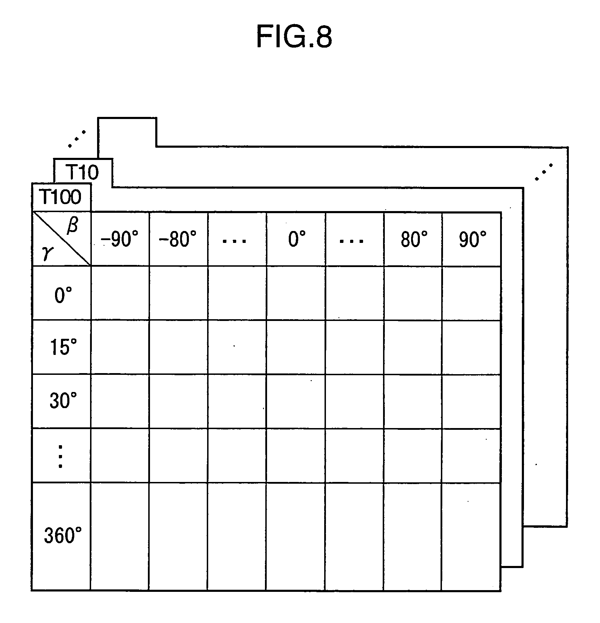

FIGS. 7 and 8 are diagrams conceptually showing the data structure of the shading-information storage section 101. The shading-information storage section 101 has two kinds of tables consisting of first and second tables. FIG 7 shows the first table, and FIG 8 shows the second table.

The first table has one column for the angle a which is the rotational angle of the light source arm 142 in the vertical direction, and another column for the angle d which is the rotational angle of the sample table 13. In the column angle a, the values of the angle a are described in the range of - 90-degree to + 90-degree, for example, in increments of 10-degree. In the column angle d, the values of the angle d are described in the range of zero to 360-degree, for example, in increments of 15-degree. Each of the cells of the first table stores thereon an index representing the second table specified by the respective values of the angles a and d. As shown in FIG. 7, the index of the second table is expressed as the alphabet T plus a suffix of a column number and a row number of each of the cells. For example, the index T00 is stored on the cell of the column 0 and the row 0, and thus "00" is described as the suffix.

The second table is composed of a plurality of tables, and indexes are given to the tables, respectively. These indexes are associated with the respective indexes described in the cells of the first table. Each of the second tables has one column for the angle β which is the rotational angle of the image pickup arm 152, and another column for the angle γ which is the rotational angle of the connecting arm 141. In the column angle β, the values of the angle β are described in the range of - 90-degree to + 90-degree, for example, in increments of 10-degree. In the column angle γ, the values of the angle γ are described in the range of zero to 360-degree, for example, in increments of 15-degree. The shading information is stored on the cells of the second tables.

While each of the values of the angles a and β is set in increments of 10-degree, and each of the values of the angles γ and d is set in increments of 15-degree in FIGS. 7 and 8, the present invention is not limited thereto, but the increment may be reduced or may be increased. Further, the increment may be appropriately changed depending on the angle range. For example, the value may be set in increments of 5-degree in the range of zero to 45-degree, and in increments of 10-degree in the range of 45-degree to 90-degree.

In the shading-information interpolation section 209, the shading information acquired at a plurality of positions adjacent to at a position where the image pickup unit 153 is located on the optical axis of the light source (hereinafter referred to as "overlap position"; there are the plurality of overlap positions) are subjected to interpolation so as to calculate a normal shading information for the shading information acquired at the overlap position. The overlap positions are pre-stored in the storage unit 100 because they are determined by the structure of the image acquisition mechanism 3, or can be specified in advance.

The 3-dimensional model storage section 102 stores therein various data for specifying the shape of a virtual 3-dimensional model created in advance by an operator in a virtual 3-dimensional space set up on a computer, for example, the coordinate of each of the apexes of a polygon composed of a plurality of triangles, quadrangles or the like and attached on the surface of the virtual 3-dimensional model. The 3-dimensional model storage section 102 also stores therein the respective coordinates of a virtual light source and a virtual camera which are arranged in the virtual 3-dimensional space.

The texture storage section 103 stores a texture to be mapped onto the virtual 3-dimensional model. The plural kings of textures are stored in the texture storage section 103, and an operator may select one of the textures to be mapped on the virtual 3-dimensional model. In addition, the texture storage section 103 can store a texture created by an operator.

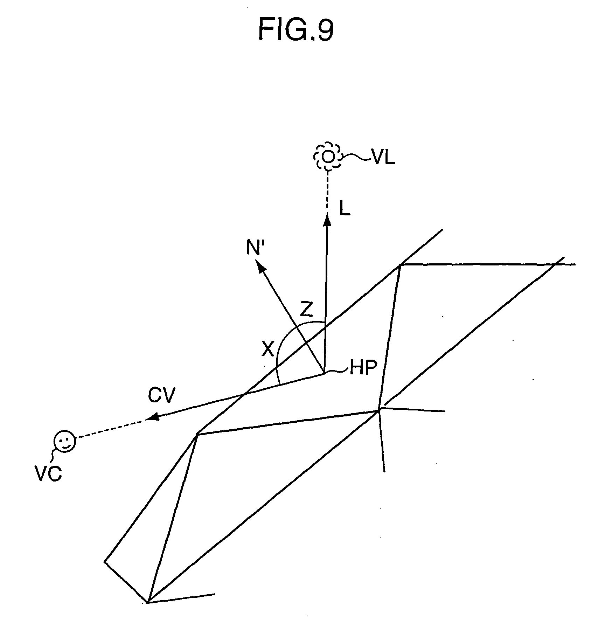

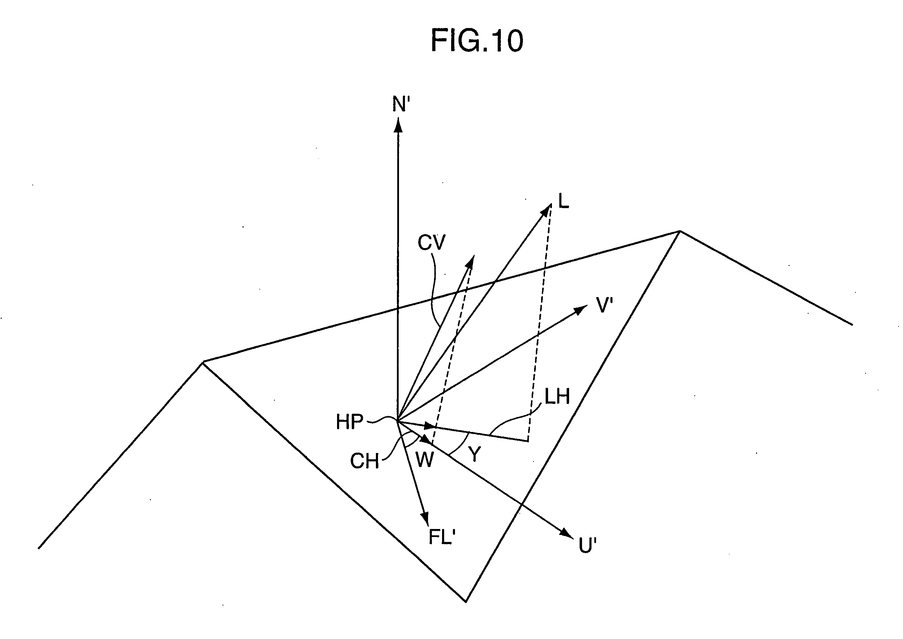

FIGS. 9 and 10 are explanatory schematic diagrams of a processing performed by the geometry-information acquisition section 202 and the parameter calculation section 203. The geometry-information acquisition section 202 is operable to set up a target position HP at a certain position on the surface of the virtual 3-dimensional model, and calculate a normal vector N' at the set-up target position HP, a light source vector L extending from the target position HP toward the virtual light source VL and a viewpoint vector extending from the target position HP toward the virtual camera VC, in accordance with the respective coordinates of the apexes of the polygon including the target position HP, the respective coordinates of the virtual camera VC and the virtual light source VL. The geometry-information acquisition section 202 is operable to sequentially set up the target position HP over the entire virtual 3-dimensional model.

The parameter calculation section 203 is operable to calculate an angle between the normal vector N' and the light source vector L (vertical angle Z of the light source) and an angle between the normal vector N' and the viewpoint vector CV (viewpoint angle X).

As seen in FIG 5, the vertical angle Z of the light source corresponds to the angle a, and the viewpoint angle X corresponds to the angle β.

As shown in FIG 10, the parameter calculation section 203 is operable to set up the axes U' and V' orthogonal to one another, on the surface of the polygon including the target position HP, and calculate an angle between the orthogonal projection vector of the light source vector L onto the plane U'-V' (orthogonal projective light-source vector LH) and the axis U', as a horizontal angle Y of the light source. In this case, in order to allow the axes U and V to correspond to the axes U' and V', the axis U' is set up on the orthogonal projection vector CH of the viewpoint vector onto the plane U'-V'. The horizontal angle Y of the light source corresponds to the angle γ in FIG 5.

The parameter calculation section 203 is also operable to calculate an angle between a fibrous direction FL' of a virtual fabric to be mapped onto the polygon and the axis U', as a sample angle W. This sample angle W corresponds to the angle d in FIG 5, which is the rotational angle of the sample table 13.

The shading-information read section 204 is operable to refer to the shading-information storage section 101 based on the parameters consisting of the vertical angle Z of the light source, the viewpoint angle X, the horizontal angle Y of the light source and the sample angle W which are calculated by the parameter calculation section 203, and read the shading information corresponding to the values of these parameters. If no shading information corresponding to the parameter values calculated by the parameter calculation section 203 exists in the shading-information storage section 101, the shading-information read section 204 can read the shading information corresponding to parameter values closest to the calculated parameter values.

If the parameter value calculated by the parameter calculation section 203 does not match with the parameter value corresponding to the shading information read by the shading-information read section 204, the interpolation section 205 will be operable to subject the read shading information to interpolation so as to calculate the shading information corresponding to the calculated parameter value. For example, if the viewpoint angle X calculated by the parameter calculation section 203 is 42-degree, and the angle β corresponding to the viewpoint angle X is read as 40-degree from the shading information, the shading information corresponding to the viewpoint X of 42-degree will be calculated using the shading information stored on the cell adjacent to the cell storing the read shading information.

The shading processing section 206 is operable to subject the maximum, minimum and average brightness values of the acquired shading information to spline interpolation, using the shading information read by the shading-information read section 204 or acquired through the interpolation by the interpolation section 205, and the texture stored in the texture storage section 103, to allow the maximum, minimum and average brightness values of the texture to correspond, respectively, to the maximum, minimum and average brightness values of the acquired shading information, so as to calculate a correlation function between the acquired shading information and the texture, and then calculate a brightness value at the target position HP of the virtual 3-dimensional model using the calculated correlation function.

The rendering processing 207 is operable to render the virtual 3-dimensional model on a virtual screen set up in the virtual 3-dimensional space, for example, using a ray tracing technique, and then output the rendered image to the display unit 26 so as to display it thereon.

The image-pickup-mechanism control section 208 is operable to output a control signal to the motor controller 46 so as to allow the motor controller 46 to move each of the sample table 13, the light-emitting section 14 and the image pickup section 15 in certain timing by a certain angle and control the sample table 13, the light-emitting section 14 and the image pickup section 15 after positioning in place. The image-pickup-mechanism control section 208 is also operable to control the light source 143 such that it supplies a driving current to the light source 143 so as to turn on the light source 143 in certain timing, for example, just before image pickup of the actual sample, and turns off the light source after the completion of the image pickup.

FIG, 11 is a flowchart showing a processing of calculating shading information using images of an actual sample placed on the sample table 13, in the image processing device. The following description will be made on the assumption that a fabric cut in a quadrangular shape having a certain length and breadth in size is used as an actual sample, and placed on the center position O of the sample table 13 (see FIG. 5) in advance.

At Step S1, upon instruction for the initiation of image pickup, the image-pickup-mechanism control section 208 drives the motor 131 to rotate the sample table 13 by a certain angle, e.g. 15-degree, so as to set up the angle d of the sample table 13.

At Step S2, the image-pickup-mechanism control section 208 drives the motor 146 to rotate the connection arm 141 by a certain angle, e.g. 15-degree, so as to set up the horizontal angle γ of the light-emitting section 14.

At Step S3, the image-pickup-mechanism control section 208 drives the motor 148 to rotate the light source arm 142 by a certain angle, e.g. 10-degree, so as to set up the vertical angle a of the light-emitting section 14.

At Step S4, the image-pickup-mechanism control section 208 drives the motor 155 to rotate the image pickup arm 152 by a certain angle, e.g. 10-degree, so as to set up the vertical angle β of the image pickup section 15.

While the positioning at Steps S1 to S4 is performed in increments of 15-degree for the angles d and γ and of 10-degree for the angles a and β, these values have been preset by an operator, and may be appropriately changed.

At Step S5, the image-pickup-mechanism control section 208 acts to turn on the light source 143 at certain intensity, and allows the image pickup unit 153 to pick up an image of the actual sample placed on the sample table 13. After the completion of image pickup, the image-pickup-mechanism control section 208 acts to turn off the light source 143. While the image-pickup-mechanism control section 208 is adapted to turn on the light source 143 every time the sample table 13, the light-emitting section 14 and the image pickup section 15 are positioned, the light source 143 may be continuously turned on during the operation of the shading-information acquisition device 143.

At Step S6, the shading-information calculation section 201 receives the image of the actual sample picked up by the image pickup unit 153 via the cable CA. The shading-information calculation section 201 sets up a certain region in the received image, and calculates the maximum, minimum and average brightness values in the set-up region. These calculated values are used as shading information.

At Step S7, the shading-information calculation section 201 associates the shading information calculated at Step S6, with the related image pickup condition (the angles a, β, γ and d), and stores it in the shading-information storage section 101. In this case, the shading-information interpolation section 209 subjects the shading information for the overlap position pre-stored in the storage unit 100 to interpolation using the shading information for a plurality of positions adjacent to the overlap position so as to calculate accurate shading information for the overlap position.

At Step S8, the image-pickup-mechanism control section 208 determines whether the angle β of the image pickup section 15 is an upper limit angle. When it is the upper limit angle (YES at S8), the process advances to Step S9. If it is not the upper limit angle (NO at S8), the angle β of the image pickup section 15 will be repeatedly set up. In this embodiment, the initial value of the angle β of the image pickup section 15 is set at - 90-degree, and the angle β is changed up to + 90-degree in increments of 10-degree sequentially.

At Step S9, the image-pickup-mechanism control section 208 determines whether the vertical angle a of the light source 143 is a predetermined upper limit angle. When it is the upper limit angle (YES at S9), the process advances to Step S10. If it is not the upper limit angle (NO at S9), the process will return to Step S3 to repeatedly set up the angle a of the light-emitting section 14. In this embodiment, the initial value of the angle a is set at - 90-degree, and the angle a is changed up to + 90-degree in increments of 10-degree sequentially. That is, the upper limit angle is + 90-degree.

At Step S10, the image-pickup-mechanism control section 208 determines whether the horizontal angle γ of the light-emitting section 14 is a predetermined upper limit angle. When it is the upper limit angle (YES at S10), the process advances to Step S11. If it is not the upper limit angle (NO at S10), the process will return to Step S2 to repeatedly set up the angle γ of the light-emitting section 14. In this embodiment, the initial value of the angle γ is set at zero-degree, and the angle γ is changed up to 360-degree in increments of 15-degree sequentially. That is, the upper limit angle is 360-degree.

At Step S11, the image-pickup-mechanism control section 208 determines whether the angle of the sample table 13 is an upper limit angle. When it is the upper limit angle ('YES at S11), the process is completed. If it is not the upper limit angle (NO at S11), the process will return to Step S1 to repeatedly set up the angle d of the sample table 13. In this embodiment, the initial value of the angle d is set at zero-degree, and the angle d is changed up to 360-degree in increments of 15-degree sequentially. That is, the upper limit angle is 360-degree.

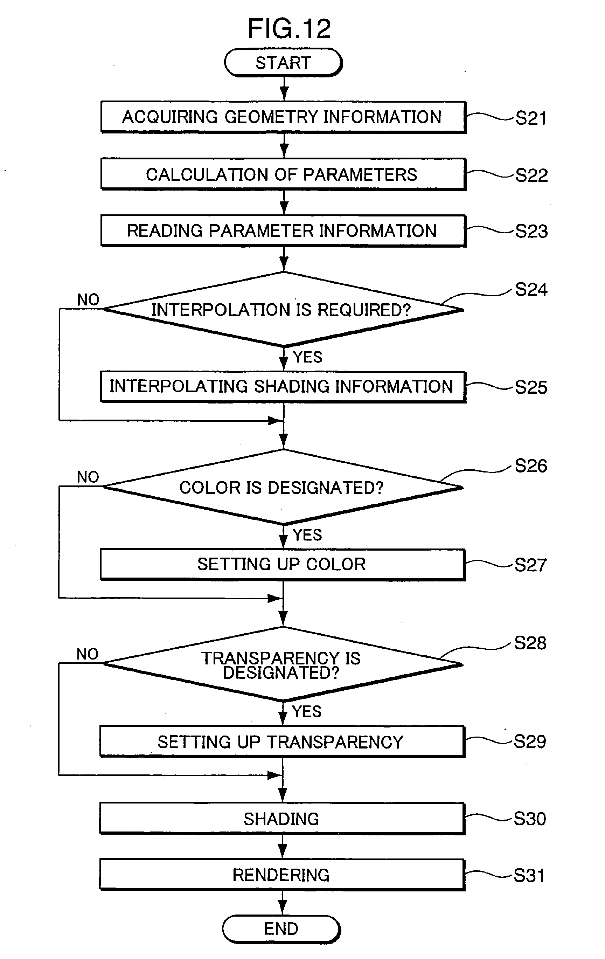

FIG. 12 is a flowchart showing a shading processing performed by the image processing device. At Step S21, the geometry-information acquisition section 20 reads data stored in the 3-dimensional model storage section 102, and calculates each of the normal vector N', the light source vector L and the viewpoint vector CV at a certain target position HP on the surface of the virtual 3-dimensional model, in accordance with the respective coordinates of the virtual camera V and the virtual light source VL, and the target position HP, as shown in FIG. 9.

Step S22, the parameter calculation section 203 calculates the vertical angle Z of the light source and the viewpoint angle X at the target position HP using the normal vector N', the light source vector L and the viewpoint vector CV, as shown in FIG. 9. Further, the parameter calculation section 203 sets up the axes U' and V' on the surface of the polygon including the target position HP, and calculates an angle of the orthogonal projective light-source vector LH relative to the axis U', as the horizontal angle Y of the light source. Furthermore, the parameter calculation section 203 calculates the angle between the axis U' and the fibrous direction FL' of the virtual fabric on the surface of the polygon set up on the target position HP, as the sample angle W.

At Step S23, the shading-information read section 204 reads the shading information corresponding to the values of the four parameters calculated at Step S22: the viewpoint angle X (corresponding to the angle B), the vertical angle Z of the light source (corresponding to the angle a), the horizontal angle Y of the light source (corresponding to the angle γ) and the sample angle W (corresponding to the angle d). If no shading information corresponding to the four parameter values calculated at Step S22 exists in the shading-information storage section 101, the shading-information read section 204 reads the shading information corresponding to parameter values closest to the four parameter-values, from the shading-information storage section 101.

At Step S24, if the shading information read at Step S23 corresponds to the approximated parameter values, it is required to subject the shading information to interpolation, and thus the step will advance to Step S25. When the shading information read at Step S23 corresponds to the parameter values calculated at Step S22, no interpolation is required, and the process advances to Step S26.

At Step S25, the interpolation section 205 calculates shading information corresponding to parameter values calculated by interpolating the shading information read at Step S23 in accordance with the difference between the parameter values calculated at Step S22 and the parameter values corresponding to the read shading information

At Step S26, when a color for use in the shading is designated by an operator (YES at S26), the process advances to Step S27 to give a predetermined color to the shading information. If there is no designation on color for the shading (NO at S26), the process advances to Step S28.

At Step S28, when an operator designates transparency to the shading (YES at Step 28), the process advances to Step S29. If the transparency is not designated (NO at S28), the process advances to Step S30.

At Step S30, the shading processing section 206 calculates the brightness value of the target position HP using the shading information set up at Steps S23 to S29, and one texture designated by the operator, among the plurality textures stored in the texture storage section 103.

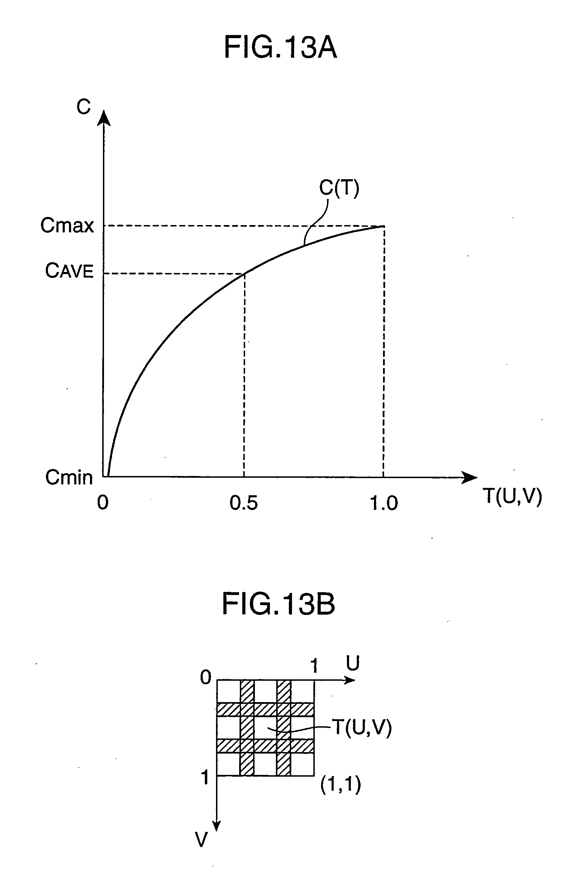

FIG. 13 is an explanatory diagram of a processing performed by the shading processing section 206, wherein A is a graph showing the relationship between texture and brightness T, and B conceptually shows the texture stored in the texture storage section 103. C max, C ave and C min on the vertical axis in A indicate a maximum brightness value, an average brightness value and a minimum brightness value included in shading information, respectively. As shown in B, the texture storage section 103 has an origin located at the upper left comer edge of a foursquare texture where one side is 1, and the axes u and v extend along the upper edge and the left edge of the texture, respectively. Thus, if the values of u and v are fixed, the brightness value of the texture will be determined.

The shading processing section 206 correlates the maximum brightness value C max, the average brightness value C ave and the minimum brightness value C min included in the set-up shading information, respectively, with the maximum brightness value C max, the average brightness value C ave and the minimum brightness value C min of the texture, in such manner that the maximum brightness value C max, the average brightness value C ave and the minimum brightness value C min of the texture become 1, 0.5 and 0, respectively. This correlation can provide brightness values C corresponding to all of the brightness values T of the texture. Thus, more realistic shading processing can be performed. Then, the shading processing section 206 subjects three points C max, C ave and C min to spline interpolation, and calculates a correlation function between the brightness value C and the brightness value T of the texture so as to satisfy Cmin=0.

After the brightness value T (u, v) of the texture to be mapped onto the target position HP is determined, the shading processing section 206 assigns the brightness value T (u, v) to the correlation function C (T) to calculate the brightness value at the target position HP. Then, the target position is sequentially changed, and the same processing as above is performed for each of new target position to apply the shading processing to the virtual 3-dimensional model. In this manner, the shading processing can be performed using the shading information acquired by picking up both the images of the texture and the actual sample to re-create delicate quality of fabrics.

At Step S31, the rendering processing 207 renders the virtual 3-dimensional model on a virtual screen set up in the virtual 3-dimensional space. The rendered image is displayed on the display unit 26.

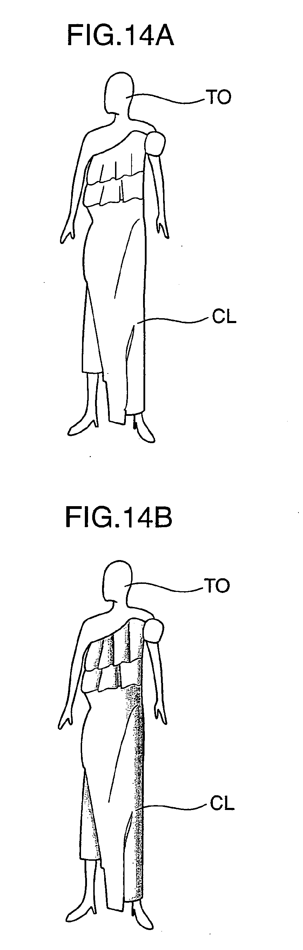

FIG. 14 is an explanatory view of the effect of the image processing in the image processing device, wherein A shows an image subjected to a shading processing using a conventional image processing device, and B shows an image subjected to the shading processing using the image processing device according to this embodiment. In both the images in FIGS. 14A and B, a virtual human model TO wears a red dress DO. As shown in FIG 14A, while the dress DO according to the conventional image processing device has some shading in the side of the waist, the entire surface of the dress DO is colored simply in red, and thus less of reality. By contrast, in the image processing device according to this embodiment the shading processing performed using images acquired by picking up an actual sample allows shading to be accurately expressed in consideration of the optical anisotropy of fabrics, and it is proved that pleats at the edge and chest area of the dress DO are realistically expressed, as shown FIG 14B.

In the present invention, the following modes may be applied thereto.
(1) While the image processing program in the above embodiment is installed in a personal computer, the present invention is not limited thereto, but the mage processing program may be composed of hardware, such as LSI.
(2) While the image pickup section 15 in the above embodiment is constructed such that it is not rotated horizontally relative to the pedestal 11, the present invention is not limited thereto, but the image pickup section 15 may be constructed to be horizontally rotatable. This may be achieved by rotatably attaching the connection arm 151 to the shaft 12, and driving the connecting arm 151 using a motor.
(3) While the texture mapping in the above embodiment is performed using textures stored in the texture storage section 103, the texture mapping is not essential for the present invention but may be omitted. In this case, the shading processing section 206 may use only the average brightness value among the shading information, and a brightness value of the target point HP of the virtual 3-dimensional model may be set up correspondingly to the average brightness value.
(4) The shading information acquired by picking up images of an actual sample in the image processing apparatus of the present invention may be used in a shading processing based on PTM (Polynomial Texture Mapping)

The points of the present invention may be summarized as follows.

The present invention is directed to an image processing apparatus for rendering a virtual 3-dimensional model created in a virtual 3-dimensional space. The image processing apparatus comprises shading-information acquisition means for acquiring shading information calculated with respect to each of the values of parameters, which includes an image pickup condition at least comprised of an image pickup direction and a light emission direction relative to the actual sample, in accordance with images of an actual sample picked up while changing the value of the parameters, shading-information storage means for storing the acquired shading information in association with the corresponding parameter values, parameter calculation means for calculating a specific value of the parameters corresponding to a given region of the virtual 3-dimensional model, in accordance with the respective positions of a virtual camera and a virtual light source which are arranged in the virtual 3-dimensional space, and the shape of the region of the virtual 3-dimensional model, and shading processing means for reading the shading information corresponding to the calculated parameter value from the shading-information storage means, and calculating a brightness value of the given region of the virtual 3-dimensional model, in accordance with the read shading information.

According to the image processing apparatus, shading information are acquired in accordance with images picked up from an actual sample while changing the value of parameters including an image pickup condition, and the acquired shading information are stored in the shading-information storage means in association with the value of the parameters at least including the image pickup condition. A specific value of the parameters corresponding to a given region of a virtual 3-dimensional model is then calculated, and the shading information corresponding to the calculated parameter value is read from the shading-information storage means. Subsequently, a brightness value in the given region is calculated in accordance with the read shading information to perform a shading processing.

Thus, the shading processing can be performed in a simple operation without any operation for setting up complicated parameters. In addition, the shading processing is performed using the shading information acquired in accordance with the images of the actual sample picked up under the different image pickup conditions. This makes it possible to express the texture of the material of the actual sample arising from coherent light or the like and the optical anisotropy of fabrics.

Preferably, the above shading-information acquisition means includes a pedestal, a sample table disposed on the pedestal and designed to allow the actual sample to be placed thereon, light-emitting means for emitting light from a first direction onto the actual sample, and image pickup means for picking up an image of the actual sample from a second direction, wherein the light-emitting means is designed to variably change the first direction, and the image pickup means is designed to variably change the second direction.

In this case, each of the first direction or the light emission direction from the light source to the actual sample, and second direction or the image pickup direction from the image pickup unit to the actual sample, can be variably changed. Thus, the image of the actual sample can be picked up while changing the image pickup condition without any difficulty to allow a plurality of shading information to be efficiently acquired.

Preferably, the shading-information acquisition means includes storing means for pre-storing an overlap position where the light-emitting means and the image pickup means are positioned such that the first and second directions overlap one another, and shading-information interpolation means for subjecting the shading information specified by a position adjacent to the overlap position, to interpolation so as to calculate the shading information specified by the overlap position.

If the first and second directions overlap one another, light emitted from the light-emitting means will be blocked by the image pickup means, and the actual sample is not accurately irradiated with the light. Otherwise, the light-emitting means exists in front of the second direction or the image pickup direction, and thereby the image of the actual sample is not accurately picked up. Consequently, the shading information cannot be accurately acquired. In the image processing apparatus of the present invention, the shading information at a position where the first and second directions overlap one another is calculated through interpolation using the shading information specified by a position adjacent to the overlap position. Thus, the shading information at the overlap position can be accurately calculated.

Preferably, the light-emitting means includes a light source arm formed in an arc shape to extend toward and above the sample table and provided with a light source at the upper end thereof, wherein the first direction is specified by a rotational position of the light source arm which is rotated about a rotational axis consisting of a line orthogonal to a perpendicular line relative to a table surface of the sample table, and a rotational position of the sample table or the light source arm, which is rotated about a rotational axis consisting of the perpendicular line.

In this case, the first direction or the light emission direction to the actual sample is specified by two-degree-of-freedom. Thus, light can be emitted to from various directions the actual sample to acquire the shading information in more detail.

Preferably, the light-emitting means includes a lens for converting the light emitted from the light source into a parallel light. In this case, light emitted from the light source is led to the sample after converted into a parallel light. Thus, the entire actual sample can be irradiated with light having approximately even intensity.

Preferably, the image pickup means includes an image pickup arm formed in an arc shape to extend toward and above the sample table and provided with an image pickup unit at the upper end thereof, wherein the second direction is specified by a rotational position of the image pickup arm which is rotated about a rotational axis consisting of a line orthogonal to a perpendicular line relative to a table surface of the sample table, and a rotational position of the sample table or the image pickup arm, which is rotated about a rotational axis consisting of the perpendicular line.

In this case, the second direction or the direction for picking up an image of the actual sample is determined by two-degree-of-freedom. Thus, light can be emitted to from various directions the actual sample to acquire the shading information in more detail.

Preferably, the parameters includes an angle of a fibrous direction of the actual sample relative to the image pickup direction.

In this case, the shading information is calculated using the parameter including the angle of the image pickup direction relative to the fibrous direction, in accordance with the image of the actual sample picked up while changing the value of the parameter. Thus, optical anisotropy of the virtual 3-dimensional model can be realistically expressed.

Preferably, the image processing apparatus further includes texture storage means for storing a texture to be mapped onto the virtual 3-dimensional model, wherein the shading-information acquisition means is operable to set up a certain region in the picked-up image of the actual sample, and calculate each of average, maximum and minimum brightness values in the set-up region, and the shading processing means is operable to calculate a certain function for calculating a brightness value in a given region of the virtual 3-dimensional model in accordance with the read shading information and the texture stored in the texture storage means, and calculate the brightness value in the given region using the calculated function.

In this case, after the brightness value of the texture to be mapped onto a given region of the virtual 3-dimensional model is determined, the brightness value at the given region is calculated the using a certain function calculated by the shading-information processing section and the brightness value of the texture as an argument, and then the shading processing is performed. Thus, the shading processing can be performed using the texture and shading information to re-create delicate quality in the virtual 3-dimensional model.

Preferably, the shading processing means is operable to subject the maximum, minimum and average brightness values included in the read shading information to interpolation in such a manner that the maximum, minimum and average brightness values in the read shading information correspond, respectively, to maximum, minimum and average brightness values of the texture, so as to calculate the given function.

In this case, the maximum, minimum and average brightness values are correlated, respectively, with the maximum, minimum and average brightness values of the texture. Thus, the brightness value of the virtual 3-dimensional model ban be calculated with respect to all of the brightness values of the texture to perform more realistic shading processing without any lack of data. In addition, the shading processing means calculates the certain function by subjecting three values, or the maximum, minimum and average brightness values includes in the read shading information, to interpolation. Thus, the certain function can be calculated at a high speed.

The present invention also provide a data structure of shading-information storage means for storing shading information to be used in rendering a virtual 3-dimensional model which is created in a virtual 3-dimensional space using a computer, wherein the shading information is acquired with respect to each of the values of parameters in accordance with images of an actual sample picked up while changing the value of the parameters, the parameters including an image pickup condition at least comprised of an image pickup direction and a light emission direction relative to the actual sample, and configured such that the picked-up images of the actual sample are associated with the corresponding parameter values.

According to this data structure, the image pickup condition is used as a parameter, and the shading information calculated based on the images of the actual sample picked up while changing the value of the parameter is stored in association with the parameter. Thus, the shading information associated with the parameter corresponding to the given region of the virtual 3-dimensional model and one another can be readily mapped onto the virtual 3-dimensional model. In addition, the shading information calculated based on the picked-up images of the actual sample allows the shading processing to be more realistically applied to the virtual 3-dimensional model.

Father, the present invention provides a shading-information acquisition device for acquiring shading information to be used in rendering a virtual 3-dimensional model which is created in a virtual 3-dimensional space using a computer. The shading-information acquisition device comprises a pedestal, a sample table disposed on the pedestal and designed to allow an actual sample to be placed thereon, light-emitting means for emitting light from a first direction onto the actual sample, and image pickup means for picking up an image of the actual sample from a second direction, wherein the light-emitting means is designed to variably change the first direction, and the image pickup means is designed to variably change the second direction.

According to this shading-information acquisition device, each of the first direction or the light emission direction from the light source to the actual sample, and second direction or the image pickup direction from the image pickup unit to the actual sample, can be variably changed. Thus, the image of the actual sample can be picked up while changing the image pickup condition without any difficulty to allow a plurality of shading information to be efficiently acquired.

The present invention also provides an image processing program for rendering a virtual 3-dimensional model created in a virtual 3-dimensional space, the image processing program being configured to allow a computer to serve as: parameter calculation means for calculating a specific value of a parameter corresponding to a given region of the virtual 3-dimensional model, in accordance with the respective positions of a virtual camera and a virtual light source which are arranged in the virtual 3-dimensional space, and the shape of the region of the virtual 3-dimensional model; shading-information storage means for storing shading information, which are calculated with respect to each of the values of the parameter in accordance with images of the actual sample picked up while changing the value of the parameter, in association with the value of the parameter including an image pickup condition at least comprised of an image pickup direction and a light emission direction relative to an actual sample; and shading processing means for reading the shading information corresponding to the calculated parameter value from the shading-information storage means, and calculating a brightness value of the given region of the virtual 3-dimensional model, in accordance with the read shading information.

According to this mage processing program, a specific value of the parameter corresponding to a given region of a virtual 3-dimensional model is calculated, and then the shading information corresponding to the calculated parameter value is read from the shading-information storage means pre-storing thereon the shading information in association with the value of the parameter. Subsequently, a brightness value in the given region is calculated. Thus, the shading processing can be performed without any operation for setting up complicated parameters. In addition, the shading processing is performed using the shading information acquired in accordance with the images of the actual sample picked up under the different image pickup conditions. This makes it possible to express the texture of the material of the actual sample arising from coherent light or the like and the optical anisotropy of fabrics.

The present also provides a computer-readable recording medium recording thereon an image processing program for rendering a virtual 3-dimensional model created in a virtual 3-dimensional space. The image processing program is configured to allow a computer to serve as: parameter calculation means for calculating a specific value of a parameter corresponding to a given region of the virtual 3-dimensional model, in accordance with the respective positions of a virtual camera and a virtual light source which are arranged in the virtual 3-dimensional space, and the shape of the region of the virtual 3-dimensional model; shading-information storage means for storing shading information in association with the value of the parameter including an image pickup condition at least comprised of an image pickup direction and a light emission direction relative to an actual sample, the shading information being calculated with respect to each of the values of the parameter in accordance with images of the actual sample picked up while changing the value of the parameter; and shading processing means for reading the shading information corresponding to the calculated parameter value from the shading-information storage means, and calculating a brightness value of the given region of the virtual 3-dimensional model, in accordance with the read shading information.

According to this recording medium recording thereon the image processing program, a specific value of the parameter corresponding to a given region of a virtual 3-dimensional model is calculated. The shading information corresponding to the calculated parameter value is read from the shading-information storage means pre-storing thereon the shading information in association with the value of the parameter, and then mapped onto the corresponding given region. Thus, the shading processing can be performed without any operation for setting up complicated parameters. In addition, the shading processing is performed using the shading information acquired in accordance with the images of the actual sample picked up under the different image pickup conditions. This makes it possible to express the texture of the material of the actual sample arising from coherent light or the like and the optical anisotropy of fabrics.

The present invention also provides an image processing method for rendering a virtual 3-dimensional model created in a virtual 3-dimensional space. The image processing method comprises the steps of: allowing a computer to calculate a specific value of a parameter corresponding to a given region of the virtual 3-dimensional model, in accordance with the respective positions of a virtual camera and a virtual light source which are arranged in the virtual 3-dimensional space, and the shape of the region of the virtual 3-dimensional model; allowing the computer to store shading information in association with the value of the parameter including an image pickup condition at least comprised of an image pickup direction and a light emission direction relative to an actual sample, the shading information being calculated with respect to each of the values of the parameter in accordance with images of the actual sample picked up while changing the value of the parameter; and allowing the computer to read the shading information corresponding to the calculated parameter value from the shading-information storage means, and calculating a brightness value of the given region of the virtual 3-dimensional model, in accordance with the read shading information.

According to this image processing method, a specific value of the parameter corresponding to a given region of a virtual 3-dimensional model is calculated. The shading information corresponding to the calculated parameter value is read from the shading-information storage means pre-storing thereon the shading information in association with the value of the parameter, and then mapped onto the corresponding given region. Thus, the shading processing can be performed without any operation for setting up complicated parameters. In addition, the shading processing is performed using the shading information acquired in accordance with the images of the actual sample picked up under the different image pickup conditions. This makes it possible to express the texture of the material of the actual sample arising from coherent light or the like and the optical anisotropy of fabrics.

### INDUSTRIAL APPLICABILITY

According to the present invention, a shading processing can be realistically performed for a virtual 3-dimensional model in a simple operation without setting up various parameters.

## Claims

1. An image processing apparatus for rendering a virtual 3-dimensional model created in a virtual 3-dimensional space, said image processing apparatus comprising:
shading-information acquisition means for acquiring shading information calculated with respect to each of the values of parameters in accordance with images of an actual sample picked up while changing the value of said parameters, said parameters including an image pickup condition at least comprised of an image pickup direction and a light emission direction relative to said actual sample;
shading-information storage means for storing said acquired shading information in association with said corresponding parameter values;
parameter calculation means for calculating a specific value of said parameters corresponding to a given region of said virtual 3-dimensional model, in accordance with the respective positions of a virtual camera and a virtual light source which are arranged in said virtual 3-dimensional space, and the shape of said region of said virtual 3-dimensional model; and
shading processing means for reading the shading information corresponding to said calculated parameter value from said shading-information storage means, and calculating a brightness value of said given region of said virtual 3-dimensional model, in accordance with said read shading information.

2. The image processing apparatus as defined in claim 1, wherein said shading-information acquisition means includes:
a pedestal;
a sample table disposed on said pedestal and designed to allow said actual sample to be placed thereon;
light-emitting means for emitting light from a first direction onto said actual sample; and
image pickup means for picking up an image of said actual sample from a second direction,
wherein said light-emitting means is designed to variably change said first direction, and said image pickup means is designed to variably change said second direction.

3. The image processing apparatus as defined in claim 2, wherein said shading-information acquisition means includes storing means for pre-storing an overlap position where said light-emitting means and said image pickup means are positioned such that said first and second directions overlap one another, wherein the shading information specified by a position adjacent to said overlap position is subjected to interpolation so as to calculate the shading information specified by said overlap position.

4. The image processing apparatus as defined in claim 2, wherein said light-emitting means includes a light source arm formed in an arc shape to extend toward and above said sample table and provided with a light source at the upper end thereof, wherein said first direction is specified by a rotational position of said light source arm which is rotated about a rotational axis consisting of a line orthogonal to a perpendicular line relative to a table surface of said sample table, and a rotational position of said sample table or said light source arm, which is rotated about a rotational axis consisting of said perpendicular line.

5. The image processing apparatus as defined in claim 4, wherein said light-emitting means includes a lens for converting the light emitted from said light source into a parallel light.

6. The image processing apparatus as defined in claim 2, wherein said image pickup means includes an image pickup arm formed in an arc shape to extend toward and above said sample table and provided with an image pickup unit at the upper end thereof, wherein said second direction is specified by a rotational position of said image pickup arm which is rotated about a rotational axis consisting of a line orthogonal to a perpendicular line relative to a table surface of said sample table, and a rotational position of said sample table or said image pickup arm, which is rotated about a rotational axis consisting of said perpendicular line.

7. The image processing apparatus as defined in claim 1, wherein said parameters includes an angle of a fibrous direction of said actual sample relative to said image pickup direction.

8. The image processing apparatus as defined in claim 1, which further includes texture storage means for storing a texture to be mapped onto said virtual 3-dimensional model,
wherein said shading-information acquisition means is operable to set up a certain region in the picked-up image of said actual sample, and calculate each of average, maximum and minimum brightness values in said set-up region, and
said shading processing means is operable to calculate a certain function for calculating a brightness value in a given region of said virtual 3-dimensional model in accordance with said read shading information and said texture stored in said texture storage means, and calculate the brightness value in said given region using said calculated function.

9. The image processing apparatus as defined in claim 8, wherein said shading processing means is operable to subject the maximum, minimum and average brightness values included in said read shading information to interpolation in such a manner that said maximum, minimum and average brightness values in said read shading information correspond, respectively, to maximum, minimum and average brightness values of said texture, so as to calculate said given function.

10. A data structure of shading-information storage means for storing shading information to be used in rendering a virtual 3-dimensional model which is created in a virtual 3-dimensional space using a computer,
wherein said shading information are acquired with respect to each of the values of parameters in accordance with images of an actual sample picked up while changing the value of said parameters, said parameters including an image pickup condition at least comprised of an image pickup direction and a light emission direction relative to said actual sample, and configured such that said picked-up images of said actual sample are associated with said corresponding parameter values.

11. A shading-information acquisition device for acquiring shading information to be used in rendering a virtual 3-dimensional model which is created in a virtual 3-dimensional space using a computer, said shading-information acquisition device comprising:
a pedestal;
a sample table disposed on said pedestal and designed to allow an actual sample to be placed thereon;
light-emitting means for emitting light from a first direction onto said actual sample; and
image pickup means for picking up an image of said actual sample from a second direction,
wherein said light-emitting means is designed to variably change said first direction, and said image pickup means is designed to variably change said second direction.

12. An image processing program for rendering a virtual 3-dimensional model created in a virtual 3-dimensional space, said image processing program being configured to allow a computer to serve as:
parameter calculation means for calculating a specific value of parameters corresponding to a given region of said virtual 3-dimensional model, in accordance with the respective positions of a virtual camera and a virtual light source which are arranged in said virtual 3-dimensional space, and the shape of said region of said virtual 3-dimensional model;
shading-information storage means for storing shading information in association with the value of said parameters including an image pickup condition at least comprised of an image pickup direction and a light emission direction relative to an actual sample, said shading information being calculated with respect to each of the values of said parameters in accordance with images of said actual sample picked up while changing the value of said parameters; and
shading processing means for reading the shading information corresponding to said calculated parameter value from said shading-information storage means, and calculating a brightness value of said given region of said virtual 3-dimensional model, in accordance with said read shading information.

13. A computer-readable recording medium recording thereon an image processing program for rendering a virtual 3-dimensional model created in a virtual 3-dimensional space, said image processing program being configured to allow a computer to serve as:
parameter calculation means for calculating a specific value of parameters corresponding to a given region of said virtual 3-dimensional model, in accordance with the respective positions of a virtual camera and a virtual light source which are arranged in said virtual 3-dimensional space, and the shape of said region of said virtual 3-dimensional model;
shading-information storage means for storing shading information in association with the value of said parameters including an image pickup condition at least comprised of an image pickup direction and a light emission direction relative to an actual sample, said shading information being calculated with respect to each of the values of said parameters in accordance with images of said actual sample picked up while changing the value of said parameters; and
shading processing means for reading the shading information corresponding to said calculated parameter value from said shading-information storage means, and calculating a brightness value of said given region of said virtual 3-dimensional model, in accordance with said read shading information.

14. An image processing method for rendering a virtual 3-dimensional model created in a virtual 3-dimensional space, said image processing method comprising the steps of:
allowing a computer to calculate a specific value of parameters corresponding to a given region of said virtual 3-dimensional model, in accordance with the respective positions of a virtual camera and a virtual light source which are arranged in said virtual 3-dimensional space, and the shape of said region of said virtual 3-dimensional model;
allowing said computer to store shading information in association with the value of said parameters including an image pickup condition at least comprised of an image pickup direction and a light emission direction relative to an actual sample, said shading information being calculated with respect to each of the values of said parameter in accordance with images of said actual sample picked up while changing the value of said parameters; and
allowing said computer to read the shading information corresponding to said calculated parameter value from said shading-information storage means, and calculating a brightness value of said given region of said virtual 3-dimensional model, in accordance with said read shading information.
